# EUROPEAN PATENT SPECIFICATION

(11) **EP 2 921 458 B1**
(45) Date of publication and mention of the grant of the patent: **04.01.2017**
(21) Application number: 15159232.6
(22) Date of filing: 16.03.2015
(51) Int. Cl.: C02F 11/12, B30B 9/12, B01D 33/42, B01D 33/27

(54) **A device for separating solids from waste water**
Vorrichtung zur Trennung von Feststoffen aus Abwasser
Dispositif de séparation de solides d'eaux usées

(30) Priority: 18.03.2014 IT RE20140024
(43) Date of publication of application: 23.09.2015
(73) Proprietor: AQSEPTENCE GROUP CARPI S.R.L., 41019 Soliera (MO) (IT)
(72) Inventor: Gavioli, Andrea, 41036 Medolla (MODENA) (IT)
(74) Representative: Corradini, Corrado

(56) References cited:
- EP-A2- 0 288 105
- EP-A2- 1 072 574
- FR-A1- 2 661 337
- JP-A- 2005 177 729
- US-A1- 2001 001 457

## Description

### TECHNICAL FIELD

The present invention relates to a device for separating solids from fluids, in particular waste water.

In greater detail, the invention relates to a grid device for separating the less fine solid fraction of the waste waters.

### PRIOR ART

In the field of waste water treatment, the use of devices for separating the large-dimension coarser solid fraction from the liquid fraction is known.

These separating devices generally comprise a support frame provided with an inlet mouth immersed in a collecting tank in which the water to be treated is conveyed and an outlet mouth, arranged outside the collecting tank, and an Archimedes screw conveyor able to collect the solid fraction, separated by a filter screen located internally of the support frame, which collects on the walls of the filter screen in proximity of the inlet mouth, and then unloads it into a special container located at the outlet mouth.

The filter screen enables the liquid fraction of the water to be treated to flow out into the collecting tank, downstream of the separating device, so that it can be sent to special sedimenting tools and/or further separating means of the finer solid fraction.

A drawback encountered in these separating devices of known type is due to the fact that in order to guarantee that in the "clean" waters downstream of the separating device the solid faction does not exceed a certain grain size and/or quantity, the filter screen must exhibit holes of smaller size, which sometimes leads to the clogging thereof, or, in order to avoid this clogging, the need to dilute the solids collected by the filter screen with filtered water and/or the need to reduce the treatment velocity, with undoubted disadvantages, in both circumstances, in terms of efficiency of the device.

Examples of known separating devices are disclosed in the documents: D1: EP288105, D2: JP 2005 177729, D3: US 2001/001457 and D4: FR 2 661 337.

In these devices, particularly D2 and D4, two coaxial (cylindrical) filter screens are present, and they are crossed by the filtered fluid in series; nevertheless such filter screens assembly leads to a greater length of the device and results in a difficult to manufacture and expensive shape of the Archimedes screw. In fact, the Archimedes screw must have two (coaxial) helix, one of which suitable to scrape the internal surface of the external filter screen and the other one suitable to scrape the internal surface of the internal filter screen.

An aim of the present invention is to obviate the above-mentioned drawbacks in the prior art, with a solution that is simple, rational and relatively inexpensive.

The aims are attained by the characteristics of the invention reported in the independent claim. The dependent claims delineate preferred and/or particularly advantageous aspects of the invention.

### DESCRIPTION OF THE INVENTION

In particular, the invention discloses a device for separating solids from waste water which comprises:
- a support frame provided with at least an inlet mouth, arrangeable internally of a collecting tank of fluids containing a solid fraction dispersed in a liquid fraction, a first outlet mouth of the liquid fraction when separated from the fluid and a second outlet mouth of at least a part of the solid fraction when separated from the fluid,
- a first filter screen associated to the support frame so as to intercept the fluid which flows from the inlet mouth to the first outlet mouth and configured such as to retain and accumulate a part of the solid fraction at least at a first surface of the first filter screen,
- at least an Archimedes screw associated rotatably to the support frame and provided with a first portion able to transport the solid fraction accumulated by the first filter screen towards the second outlet mouth.

In the invention, the device comprises a second filter screen associated to the support frame so as to intercept the fluid flowing from the inlet mouth to the first outlet mouth, located upstream of the first filter screen in an advancement direction of the fluid from the inlet mouth to the first outlet mouth and configured so as to retain and accumulate a part of the solid fraction at least at a second surface of the second filter screen, the Archimedes screw comprising a second portion able to transport the solid fraction accumulated from the second filter screen towards the second outlet mouth.

With this solution, the separating device of the invention obviates the problems encountered in the separating devices of known type, improving the efficiency thereof, enabling at the same time a separation of the finer particulate with respect to the devices of known type without suffering the drawback of clogging of the fine filter screen.

Advantageously, the second filter screen exhibits a substantially truncoconical shape, with an external diameter and an internal diameter larger than the external diameter of the Archimedes screw and inserted on the second portion of the Archimedes screw with a concavity facing towards the free end of the Archimedes screw located at the inlet mouth.

Thanks to this solution, the separating device is particularly compact, for example exhibiting a same size as the separating devices of known type and less long than the devices shown in D1-D4.

Further, said shape of the second filter screen allows to have a more extensive filtering surface, allows that the two filter screens operate both on the same Archimedes screw (i.e. two consecutive portions of the same Archimedes screw) - wherein the Archimedes screw may be constituted by a single helix - and, at the same time, allows a decreasing of the overall axial dimension of the filter screens.

Again, the slope of the second truncoconical filter screen allows a greater degree of separation of the solid fraction from the liquid fraction.

In a further aspect of the invention attaining the same aims, the second filter screen further comprises holes of larger dimensions with respect to the holes of the first filter screen.

In practice, the second filter screen has a function of reducing the size of the larger solid fraction, enabling the first filter screen to have a greater filtering efficiency.

In a further aspect of the invention, the first filter screen exhibits a tubular shape having a larger diameter than an external diameter of the Archimedes screw and is inserted on the first portion of the Archimedes screw.

With this solution, the first filter screen can exhibit a large active surface for filtering with a relatively small size.

In a further aspect of the invention, the first filter screen is rotatably associated about a first portion of a superiorly-open channel, fixed to the support frame and which at least partially surrounds the first portion of the Archimedes screw.

With this solution, the solid fraction which is deposited by gravity on a lower portion of the first filter screen can easily be loaded from above onto the first portion of the channel in order to be transported from the Archimedes screw towards the second outlet mouth.

In order, for example, to improve the loading of the channel served by the Archimedes screw, the first filter screen can advantageously comprise at least a blade, for collecting and accumulating the solid fraction, which blade is fixed on the first surface of the first filter screen.

In a further aspect of the invention, the second filter screen comprises at least a part inserted internally of the first filter screen.

In this way, the second filter screen insists on the Archimedes screw serving the first filter screen.

In a further aspect of the invention, the second filter screen is rotatably associated about a second portion of a superiorly open channel, fixed to the support frame and which at least partially surrounds the second portion of the Archimedes screw.

With this solution, the solid fraction which deposits by force of gravity on a lower portion of the second filter screen can be easily loaded from above onto the second portion of the channel in order to be transported by the Archimedes screw towards the second outlet mouth along the channel.

In order for example advantageously to improve the loading of the channel served by the Archimedes screw, the second filter screen comprises at least a collecting and accumulating blade of the solid fraction, which blade is fixed to the second surface of the second filter screen.

The second filter screen is advantageously fixed to the first filter screen.

In this way, the two filter screens are substantially solidly constrained (in rotation) and can be actuated by a single motor.

In a further aspect of the invention, the separating device comprises a cleaning group of at least one among the first filter screen and the second filter screen.

With this solution the degree of clogging of the filter screens can be reduced, improving the filtering capacity thereof.

In order to increase the degree of separation of the solid fraction from the liquid fraction, at least one among the first portion and the second portion of the channel advantageously comprises drainage holes of the liquid fraction of the separating fluid loaded in the channel.

In a further aspect of the invention, a group is provided for separating solids from waste fluids which comprises a collecting tank of the fluid to be separated in which a device is fixable, as described above, so as to sub-divide the internal volume of the collecting tank into two separate environments communicating only by means of the first filter screen and the second filter screen, of which a first environment of the fluid to be filtered communicating with the inlet mouth of the device and a second environment communicating with the first outlet mouth of the device.

This solution enables attaining the above-described aims for the separating device.

### BRIEF DESCRIPTION OF THE DRAWINGS

Further characteristics and advantages of the invention will emerge from a reading of the description that follows, provided by way of non-limiting example, with the aid of the figures of the accompanying tables.

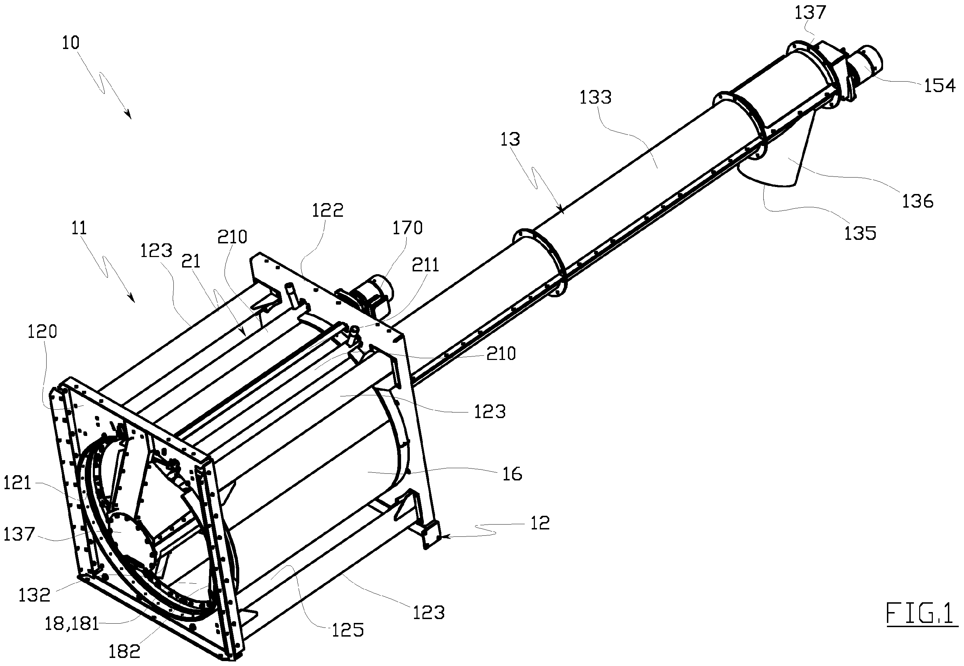

Figure 1 is an axonometric view of a separating device according to the invention.
Figure 2 is a lateral view of the device of figure 1, positioned in a separating group in a schematic view.

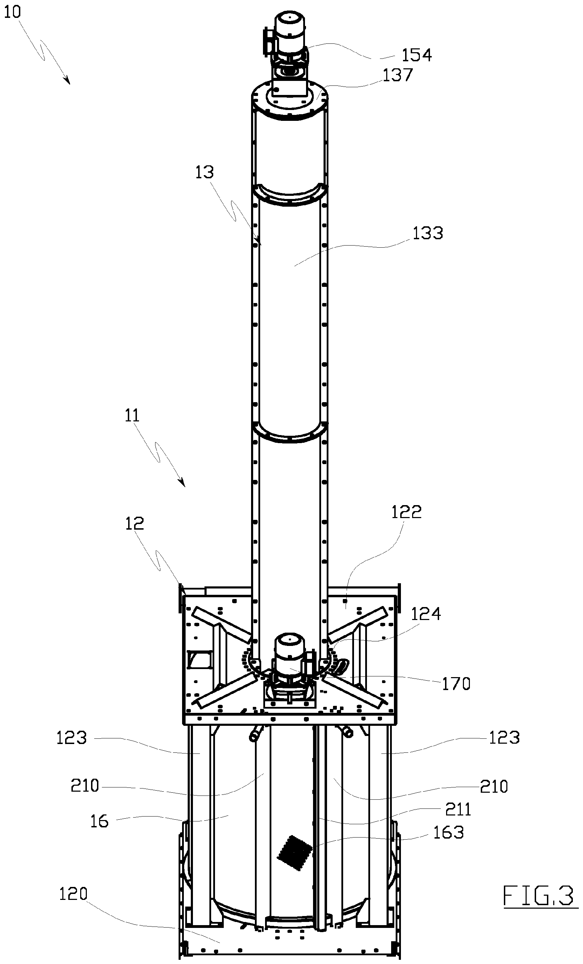

Figure 3 is a view from above of figure 1.

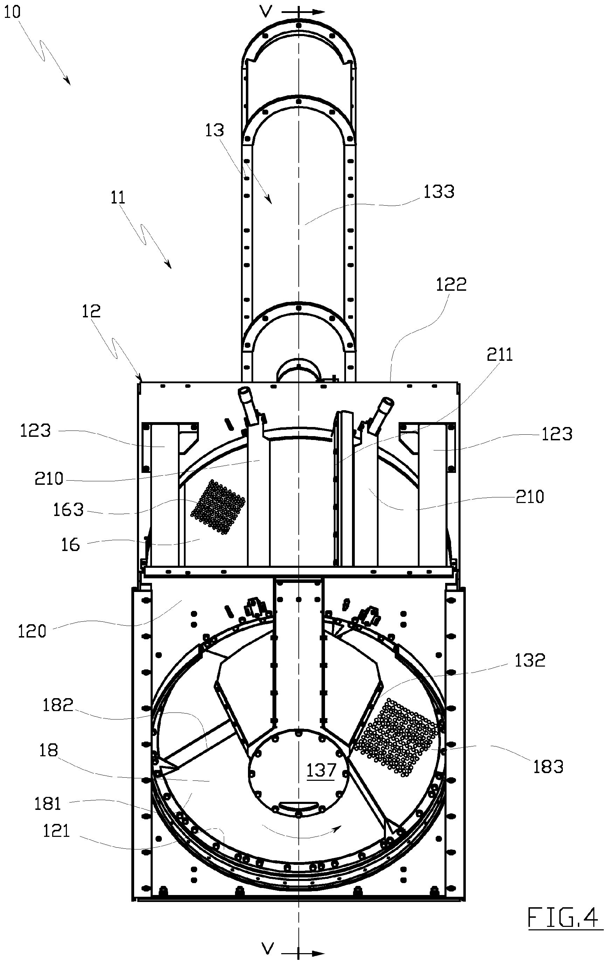

Figure 4 is a rear view of figure 1.

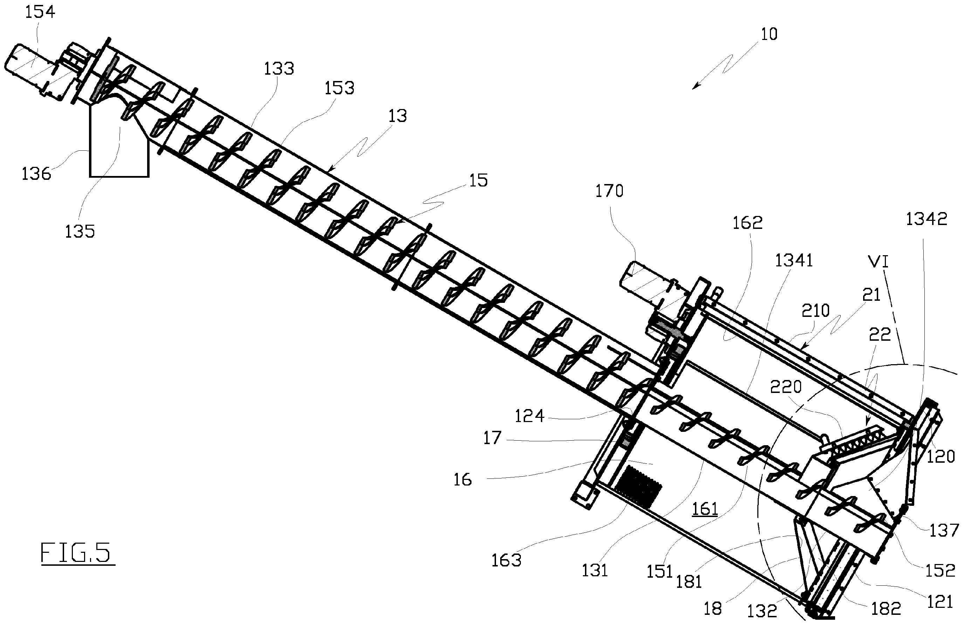

Figure 5 is a section view along line V-V of figure 4.

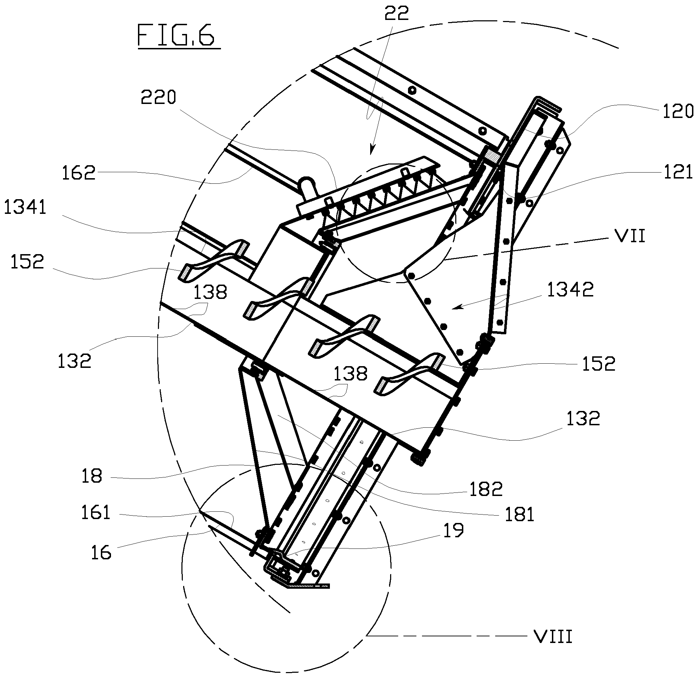

Figure 6 is a larger-scale view of detail VI of figure 5.

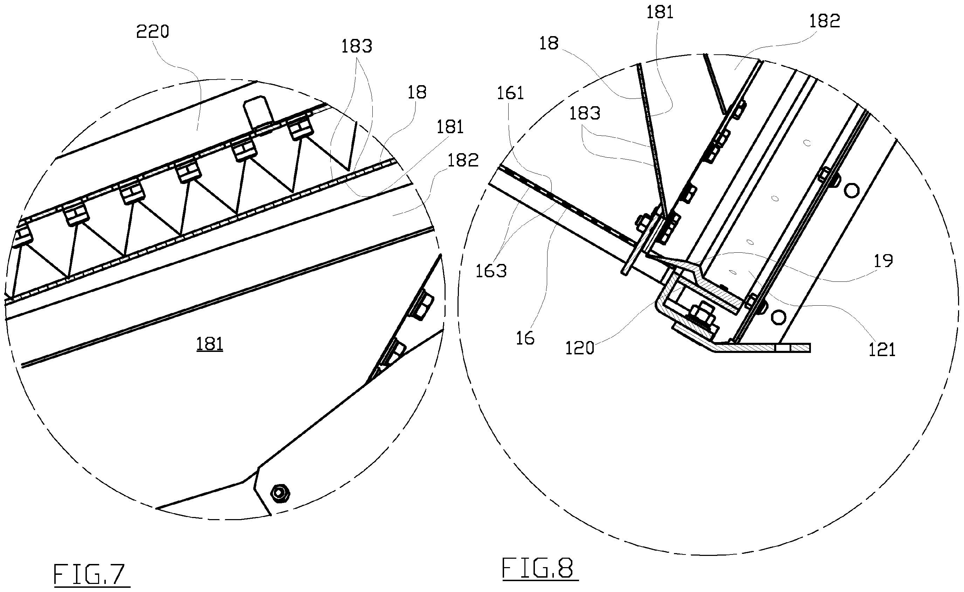

Figure 7 is a larger-scale view of detail VII of figure 6.
Figure 8 is a larger-scale view of detail VIII of figure 6.

### BEST WAY OF CARRYING OUT THE INVENTION

With particular reference to the figures, 10 denotes in its entirety a grid separating device of the solid fraction, in particular the less fine fraction, from waste fluids, for example waste waters.

In practice, the waste waters exhibit a dispersed and/or suspended solid fraction in the liquid fraction, for example in water, to be recycled.

In separating groups of the less-fine solid fraction of the fluid, the fluid to be separated is conveyed into a suitable collecting tank 1 (which can be part of the device 10 or already installed in loco according to circumstances), for example long and narrow, at a first longitudinal end 1a (for example by means of an inlet that is not shown) the fluid is sent in ingress, which fluid contains the solid fraction to be separated from the liquid fraction and at a second end whereof (provided with an outlet that is not shown) the separated liquid fraction is collected, to be sent on for example to other treatment plants for fine separation of the sludge still dispersed therein.

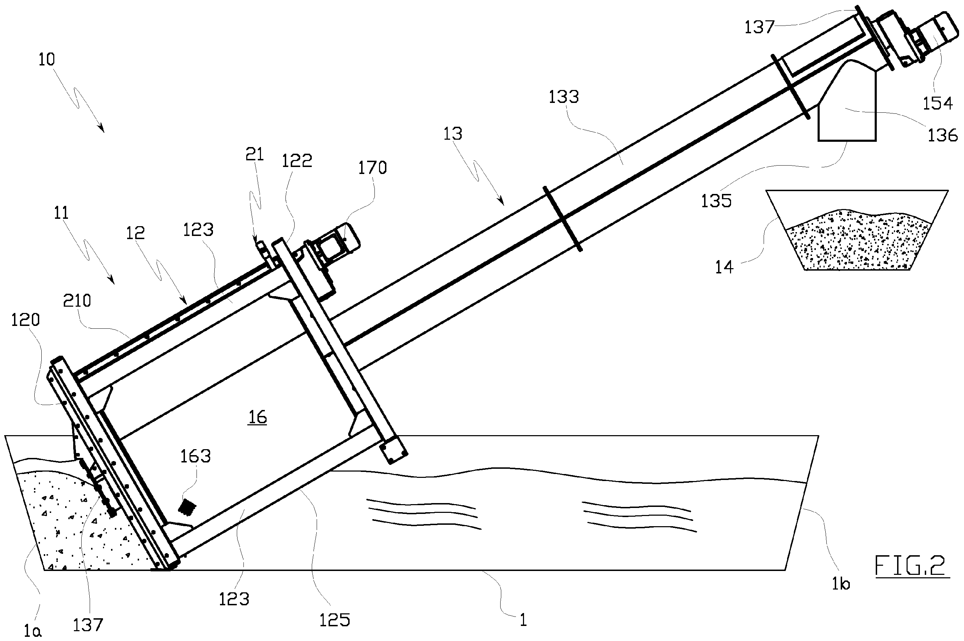

The collecting tank 1 is schematically represented in figure 2.

The device 10 comprises a support frame 11 fixable internally of the collecting tank 1, for example in an intermediate zone thereof between the first end 1 a and the second end 1 b.

The support frame 11, for example, includes a box-shaped body 12, for example equipped with a first wall 120 for example provided with a through-opening defining an inlet mouth 121 exhibiting for example a substantially circular shape.

In practice, the inlet mouth 121 of the support frame 11 is intended to be arranged, at least partially, inside the collecting tank 1.

Generally the level of the fluid to be separated reaches, in use, to about 1/2 the height of the inlet mouth 121.

The first wall 120, for example, has a substantially complementary shape to the internal shape of the collecting tank 1, so that it can rest (substantially sealedly) on the bottom and the lateral walls thereof, so as to sub-divide the internal volume of the collecting tank 1 into two environments, intercommunicating only via the inlet mouth 121.

In practice, the two environments into which the collecting tank 1 is sub-divided by the device 10 are a first environment communicating with the inlet of the fluid to be separated, containing the fluid to be separated, and a second environment communicating with the outlet of the liquid fraction separated from the fluid under separation process, and in which only the liquid fraction of the fluid is contained.

The box-shaped body 12 comprises a second wall 122, opposite the first wall and parallel thereto, joined to the first wall 120 by a plurality of uprights 123 which form the box-shaped body 120 substantially as a cage.

The second wall 122 affords a through-hole 124, for example substantially circular, substantially aligned and coaxial with the inlet mouth 121 of the first wall 120.

In practice, the first environment into which the internal volume of the collecting tank 1 is sub-divided is in communication with the second environment via the through-opening 122 and the open interspaces between the various uprights 123, which interspaces define a first outlet mouth 125 of the device 10 from which the liquid fraction which is to be separated from the fluid treatment exits.

The first wall 120 and the second wall 122 have a substantially quadrangular shape (square in the example), the uprights 123 are for example four in number, and, for example, reciprocally connect the corners of the opposite walls 120, 122, leaving four open walls defined.

For example, the box-shaped body 120 can exhibit one or more buffer sheets (not shown) that can occlude at least one of the interspaces defined between the uprights 123.

In particular the box-shaped body 120 exhibits three buffer sheets each fixed to a pair of contiguous uprights 123 and respectively able to close one of the interspaces, for example the upper interspace and the lateral interspaces of the box-shaped body 120, leaving only the lower interspace which defines the first outlet mouth 125 open.

The device 10 also comprises a channel 13, which for example is fixed to the support frame 11.

The channel 13 for example is inserted internally of the mouth of the input 121 (for example, with high radial play) and the through-hole 124 (for example substantially snugly).

In particular, the channel 13 comprises a first portion 131 defined internally of the box-shaped body 12, for example axially contained between the first wall 120 and the second wall 123.

Further, the channel 13 comprises a second portion 132 defined substantially straddling the first wall 120 of the box-shaped body 120, or inserted in the inlet mouth 121, so that for example it can project outside the box-shaped body 120 by a small axial segment thereof.

The channel 13 comprises a third portion 133, defined externally of the box-shaped body 120, in practice prolonging the first portion 131 on the opposite side with respect to the second portion 132.

The third portion 133 is much longer than the second portion 132 and the second portion is shorter than the first section 131.

The channel 13 comprises an access portion 1341, 1342 and a second outlet mouth 135 which will be positioned externally of the collecting tank 1.

The access portion 1341, 1342 is in practice defined at least at one of the first portion 131 and second portion 132 of the channel 13.

In the example the channel 13 comprises a first access portion 1341 defined at the first portion 131 of the channel 13 and a second access portion 1342 defined at the second portion 132 of the channel 13, for example mutually axially separated.

In practice, the first portion 131 and second portion 132 of the channel 13 are superiorly open, i.e. have a substantially U-shaped lateral section (having a substantially circular shape).

The access portion 1341, 1342 (i.e. the first access portion 1341 and the second access portion 1342, respectively) is defined by the open section (radial and facing upwards) of the channel 13, at the first portion 131 and the second section 132.

The second outlet mouth 135 is defined at the third portion 133 of the channel 13, for example in proximity of the end distal to the box-shaped body 120 thereof.

In the illustrated example, the second outlet mouth 135 is defined by a radial opening afforded on the bottom of the third portion 133 of the channel 13; in practice the second outlet mouth 135 is facing downwards and is prolonged for example by a hollow shank 136 branching inferiorly of the third portion 133 of the channel 13.

The opposite axial ends of the channel 13 are closed by opposite flanges 137 fixed, for example bolted, to the channel 13.

The third portion 133 of the channel 13 is substantially tubular, with a closed section and, therefore, is only open at the second outlet mouth 135.

At least one among the first portion 131 and second portion 132 of the channel 13 comprises drainage holes 138, enabling drainage of the liquid fraction collected in the channel 13.

The drainage holes 138 are defined for example at the bottom of the first portion 131 and/or the second portion 132.

In the example both the first portion 131 and second portion 132 are provided with respective drainage holes 138. The channel 13 has a substantially straight longitudinal axis.

Further, the channel 13 preferably exhibits a longitudinal axis inclined with respect to the horizontal, so that the second outlet mouth 135 is at a higher level than the access portion 1341, 1342.

For example, the longitudinal axis of the channel 13 is inclined by an angle substantially of (or close to) 35° from the horizontal.

In the example, the channel 13 is fixed to the box-shaped body 12, so that the longitudinal axis of the channel 13 is substantially perpendicular to the plane defined by one (both in the example) of the first wall 120 and the second wall 120.

The box-shaped body 12 is thus fixed inside the collecting tank 1, so that the longitudinal axis of the channel 13 is inclined relatively to the horizontal and, for example, substantially aligned in plan view with the longitudinal axis of the collecting tank 1 (which joins the first end 1 a to the second end 1 b).

The separating group and/or the device 10 comprises, for example, a conveyor container 14 (figure 2) arrangeable below the outlet mouth 135 of the channel 13 for collecting (e.g. by force of gravity) the solid fraction separated from the fluid being separated that is exiting from the second outlet mouth 135.

The container conveyor 14 could for example be a tank body, or a bag or a conveyor or the like, as known to the skilled person in the sector.

The device 10 comprises at least an Archimedes screw 15 rotatably associated internally of the channel 13 and connectable to the access portion 1341, 1342 with the second outlet mouth 135 for the conveying of the solid fraction, which accumulates at the access portion 1341, 1342, from the access portion towards the second outlet mouth 135.

The screw 15 is for example inserted coaxially internally of the channel 13, so as to longitudinally cross the channel from the access portion 1341, 1342 to the second outlet mouth 135.

The screw 15 is for example an Archimedes screw without a central shaft; in practice it is constituted only by a spiral (or more) wound helically and delimiting a substantially cylindrical central cavity.

It is, however, possible for the screw 15 to exhibit a fully-developing central shaft, as known to the skilled person in the sector.

Despite being a single monolithic body, the screw 15 can ideally be divided into several portions, depending on the axial position and the positioning thereof in the channel 13.

In practice, the screw 15 exhibits a first portion 151 (for example intermediate) located internally of the first portion 131 of the channel 13.

The first portion 151 of the screw 15 in practice exhibits a same length as the first section 131 of the channel 13.

Further, the screw 15 comprises a second portion 152 (e.g. an end portion) positioned internally of the second portion 132 of the channel 13.

The second portion 152 of the screw 15 in practice exhibits a same length as the second portion 132 of the channel 13.

At the first portion 151 and/or the second portion 152 the screw 15 can comprise radial brushes, for example mounted in sectors and bolted or otherwise removably fixed to the screw 15.

In practice, the radial brushes radially extend the helix of the screw 15, in practice going unto brushing contact with the bottom (of the first portion 131 and/or the second portion 132) of the channel 13.

The screw 15 further comprises a third portion 153 (e.g. an end portion), located on the opposite side of the second portion 152 from the first portion 151, which third portion 153 is located internally of the third portion 133 of the channel 13.

The third portion 153 of the screw 15 in practice has a same length as the third portion 133 of the channel 13.

The drive shaft of a first motor 154 (for example with the interposing of a gearbox) able to actuate the rotation of the screw 15 is associated to the free end of the third portion 153.

The screw 15 is, for example, a variable section along the longitudinal axis thereof.

For example, the first portion 151 and/or the second portion 152 exhibit a diameter (e.g. external) that is than the diameter (external) of the third portion 153.

In the example shown the screw 15 is realised from an internal helix that extends over an entire length (the first, second and third portions 151,152,153) of the screw 15 which is fixed (or solidly constrained) to an external helix which extends over only the third section 153.

In practice, the first portion 151 and second portion 152 of the screw 15 are inserted with abundant radial play internally of the respective first portion 131 and second portion 132 of the channel 13.

The third portion 153 of the screw 15 is inserted with little radial play internally of the third portion 133 of the channel 13.

The device 10 further comprises a first filter screen 16 associated to the support frame 11 so as to intercept the fluid flowing from the inlet mouth 121 to the first outlet mouth 125 and configured so as to retain and accumulate a part of the solid fraction at least at a first surface 161 of the first filter screen 16, for example located on the inside of the box-shaped body 12.

The first filter screen 16 has a tubular shape with a larger diameter than the external diameter of the screw 15 and the channel 13 and is inserted, e.g. coaxially, on the first portion 151 of the screw itself.

The internal surface 161 of the first filter screen 16 is, in practice, facing (aligned radially and/or vertically) the first portion 151 of the screw 15.

The first filter screen 16 is supported at opposite ends by the first wall 120 and second wall 122 of the box-shaped body 12.

In practice, the first filter screen 16 exhibits an axial length substantially equal to the distance between the first wall 120 and the second wall 122 of the box-shaped body 12.

The first filter screen 16 is rotatably associated with respect to an axis thereof about the first portion 131 of the channel 13.

In practice, a bearing 17 is interposed between the second wall 122 of the box-shaped body 120 and the upper end of the first filter screen 16, which bearing 17 can rotatably constrain the first filter screen 16 to the support frame 11.

The first filter screen 16 comprises at least a collecting and accumulating blade 162 of the solid fraction which is fixed on the internal surface 161.

The blade 162 exhibits a substantially equal length to the length of the first filter screen 16 and, for example, is positioned with the longitudinal axis thereof parallel to the axis of the first filter screen.

The blade 162 however can exhibit a helical development or can be inclined with respect to the axis of the first filter screen 16.

The blade 162 can be substantially radial or preferably, as in the example, exhibiting an inclination relative to the radial direction at an acute angle, for example substantially (or around) 30° forward with respect to the rotation direction of the first filter screen 16.

The first filter screen 16 includes a plurality of blades 162 distributed and spaced (e.g. equidistant and/or parallel) along the internal surface 161.

The first filter screen 16 comprises a first plurality of through-holes 163, for example uniformly distributed along the extension thereof.

In the figures, the holes 163 have been represented schematically in a small portion and with dimensions that do not correspond to reality, but for example, they cover the entire surface of the first filter screen 16 and place the internal surface 161 in communication with the first outlet mouth 125.

The holes 163 are configured such as to retain the solid fraction and drain the liquid fraction of the fluid passing from the inlet mouth 121 toward the first outlet mouth 125.

The holes of the first plurality of holes 16, for example, have a diameter of between 0.5 and 6 mm, in the example substantially 1 mm.

A second motor 170 (for example, associated with a gear reducer and drive transmission means such as a series of gears or a belt-pulley coupling) is associated to the upper end of the first filter screen 16, which second motor 16 is able to drive the first filter screen 16 in rotation about the axis thereof.

The first motor 154 and the second motor 170 are mutually independent.

The device 10 includes, in particular, a second filter screen 18 associated to the support frame 11 so as to intercept the fluid flowing from the inlet mouth 121 to the first outlet mouth 125.

The second filter screen 18 is located upstream of the first filter screen 16 in the advancing direction of the fluid from the inlet mouth 121 to the first outlet mouth 125 and is configured so as to retain and accumulate a part of the solid fraction at least at a concave surface 181 thereof.

The second filter screen 18 comprises at least a portion inserted internally of the first filter screen 16, for example radially interposed between the first filter screen 16 and the screw 15.

The second filter screen 18 has a substantially truncoconical shape, with an external diameter and an internal diameter greater than the external diameter of the screw 15 and the channel 13.

The second filter screen 18 is inserted, for example coaxially, on the second portion 152 of the screw with a concavity thereof facing the free end of the screw 15, or the end of the screw 15 positioned at the inlet mouth 121 and for example projecting externally of the box-shaped body 12.

In practice, the broadened end of the second filter screen 18 is radially aligned on an intermediate portion (or close to the free end) of the second portion 152 of the screw 15.

The tapered end of the second filter screen 18 is radially aligned and keyed on the end of the second portion 152 of the screw 151 constrained to the first portion 151, i.e. in the join area between the first portion 151 and second portion 152 of the screw 15 (more in particular, in the join area between the first portion 131 and second portion 132 of the channel 13).

The second filter screen 18 can equivalently exhibit a substantially disc-shape or tubular shape or a combination of the two, depending on requirements.

The second filter screen 18 is able to occlude, in practice, the lower open end of the first filter screen 16, substantially intercepting the inlet mouth 121.

In the example, the second filter screen 18 is fixed to the first filter screen 16, for example the broadened end of the second filter screen 18 is fixed to the lower free end of the first filter screen 16, for example by means of bolted flanges.

The concave surface 181 of the second filter screen 18 in practice faces (aligned radially and/vertically) the second portion 152 of the screw 15.

The second filter screen 18 has an axial length that is substantially smaller than the axial length of the first filter screen 16, for example substantially 1/4 of the axial length of the first filter screen 16.

The second filter screen 18 is rotatably associated to the axis thereof about the second portion 131 of the channel 13. In the illustrated example, the second filter screen 18 is driven in rotation, for example by the second motor 170, via the first filter screen 16 (the two screens being solidly constrained in rotation).

A further independent motor can however be used to directly rotate the second filter screen 18, which can then be deconstrained from the first filter screen 16.

The second filter screen 18 includes at least a collecting and accumulating blade 182 of the solid fraction, which blade 182 is fixed on the concave surface 181.

The blade 182 exhibits substantially a same length as a length of a generatrix of the second filter screen 18 and, for example, is positioned with the longitudinal axis thereof parallel to the axis of the second filter screen.

The blade 182 can however exhibit a helical development or can be inclined with respect to the axis of the second filter screen 18.

The blade 182 can be substantially radial or, preferably, as in the example, can exhibit an inclination with respect to the radial direction by an acute angle, for example substantially (or about) 30° forward with respect to the rotation direction of the second filter screen 18.

The second filter screen 18 comprises a plurality of blades 182 distributed and spaced (for example equidistant and/or parallel) along the concave surface 181.

The second filter screen 18 comprises a first plurality of through-holes 183, for example uniformly distributed along the extension thereof.

In the figures, the holes 183 have been represented schematically in a small portion and dimensions do not correspond to reality, but for example, they cover the entire surface of the second filter screen 18.

In particular, the holes 183 place the concave surface 181 in communication with the internal volume of the first filter screen 16.

The holes 183 are configured so as to retain the solid fraction (coarse) and drain the liquid fraction of the fluid passing from the inlet mouth 121 (internally of the first filter screen 16 and from the first filter screen 16) towards the first outlet mouth 124.

The holes 183 of the second filter screen 18 are larger than the holes 163 of the first filter screen 16.

The holes of the first plurality of holes 183, for example, exhibit a diameter comprise between 0.4 and 10 mm, in the example substantially 6 mm.

The device 10 also comprises at least an annular seal 19 able to surround the inlet mouth 121 and substantially sealedly connect the inlet mouth 121 with at least one of the first filter screen 16 and the second filter screen 18.

In the example, the annular seal 19 comprises a flexible lip a first end of which is fixed along an entire perimeter (internal) of the inlet mouth 121 and a second free end of which is able to go in forced support on the external peripheral portion of the concave surface 182 of the second filter screen 18 (for example at a bolted flange which constrains the first filter screen 16 to the second filter screen 18).

In practice, the annular seal 19, in addition to keeping the connection between the environment external of the box-shaped body 12 and the inside thereof sealed, so that the fluid under filtration enters the box-shaped body 12 only through the second filter screen 18, is able to fluid-dynamically divide the first filter screen 16 from the second filter screen 18 (for example by cooperating with a fixing flange physically joining the first filter screen 16 to the second filter screen 18).

Note that the two environments into which the collecting tank 1 is sub-divided by the device 10, i.e. the first environment communicating with the inlet of the fluid to be separated located upstream of the device 10 (in which the fluid to be separated is present) and the second environment downstream of the device 10 and communicating with the outlet of the liquid fraction separated from the fluid under separation (in which only the liquid fraction of the fluid is contained), are in fluid communication with one another only through (in sequence) the second filter screen 18 and the first filter screen 16, which during the passage of the fluid under filtration from the first environment to the second environment will retain a respective solid fraction which is conveyed by the screw 15 to the second outlet 135.

The device 10 comprises at least a cleaning group 21,22 of at least one of the first filter screen 16 and the second filter screen 18.

In the example, the device 10 comprises a first cleaning group 21 of the first filter screen 16 and a second cleaning group 22 of the second filter screen 18.

The first cleaning group 21 includes a first bar 210 having a plurality of nozzles for dispensing a washing fluid, for example a portion of fluid drawn - by branching means such as pumps and conduits not shown in the figures - from the collecting tank 1, into the environment thereof located downstream of the device 10 (i.e. in the environment in which the "clean" liquid fraction of the fluid is present).

The first bar 210 is for example positioned externally of the first filter screen 16, with the nozzles facing towards the surface of the first filter screen 16 opposite the internal surface 161, for example fixed to the support frame 11.

The first bar 210 has a length for example substantially equal to the length of the first filter screen 16 and is fixed, for example with a longitudinal axis thereof substantially parallel to the axis of the first filter screen 16.

In particular, the first bar 210 exhibits the opposite ends thereof respectively fixed to the first wall 120 and second wall 122 of the box-shaped body 12.

For example, the first cleaning group 21 includes a plurality of the first bars 210 spaced from one another (for example, equally spaced and/or parallel).

The first cleaning group can further comprise a brush 211 (or more than one) located externally of the first filter screen 16, so as to go into brushing contact with the surface of the first filter screen 16 opposite the internal surface 161.

The brush 211 is for example fixed to the support frame 11. The brush 211 exhibits a length that is for example substantially equal to the length of the first filter screen 16 and is fixed, for example with a longitudinal axis substantially thereof parallel to the axis of the first filter screen 16 (for example, interposed between two first bars 210).

In particular, the brush 211 exhibits opposite ends respectively fixed to the first wall 120 and the second wall 122 of the box-shaped body 12.

The second cleaning group 22 comprises a second bar 220 with a plurality of nozzles for dispensing a washing fluid, for example a portion of fluid drawn - by branching means such as pumps and conduits not shown in the figures - from the collecting tank 1, into the environment thereof located downstream of the device 10 (i.e. in the environment in which the "clean" liquid fraction of the fluid is present).

The second bar 220 is for example positioned externally of the second filter screen 18 (and internally of the first filter screen 16), with the nozzles facing towards the surface of the second filter screen 18 opposite the concave surface 161, for example fixed to the support frame 11 (in particular to the channel 13, at the first portion 131 thereof).

The second bar 210 has a length for example substantially equal to the length of the generatrix of the second filter screen 18 and is fixed, for example with a longitudinal axis thereof substantially parallel to the axis of the second filter screen 18.

In particular, the second bar 220 exhibits an end constrained to the channel 13 (at the join zone between the first portion 131 and the second portion 132 thereof) and the free opposite end.

For example, the second cleaning group 22 includes a plurality of the second bars 220 spaced from one another (for example, equally spaced and/or parallel).

In the light of the above, the operation of the device 10 is as follows.

The fluid to be separated is conveyed to the collecting tank 1 at the first end 1 a thereof and is pushed (for example by force of gravity or forced by the inertia of the fluid itself from the pumping means) towards the second end 1 b. In practice, the fluid to be separated is forced to enter the device 10 through the inlet 121 thereof.

Having crossed the inlet mouth 121, the fluid in the treatment encounters the second filter screen 18, which retains a part of the solid fraction (the coarse portion) leaving the liquid fraction to drain, together with a fine solid fraction, downstream of the second filter screen 18 in the crossing direction of the fluid, i.e. in the volume interposed between the second filter screen 18 and the first filter screen 16.

The coarse solid fraction deposits and accumulates by force of gravity on the concave surface 181 of the second filter screen 18, for example at the instantaneous lower portion thereof.

The rotation of the second filter screen 18 enables transfer of the coarse solid fraction, deposited and accumulated at the portion of the instantaneous lower concave surface 181, upwards in order to be unloaded, by force of gravity, internally of the second portion 132 of the channel 13 (through the second access portion 1342 thereof).

In practice, the blades 182 are realised such as to load and retain a quantity of coarse solid fraction deposited and accumulated at the portion immediately below the second filter screen 18 (at the concave surface 181 thereof) and, at each revolution of the second filter screen 18, discharge the quantity of coarse solid fraction into the second portion 132 of the channel 13.

The second portion 152 of the screw 15 is able to come into contact with the coarse solid fraction which is gradually loaded and stored internally of the second portion 132.

In practice, the rotation of the screw 15 conveys the coarse solid fraction from the second portion 152 axially towards the first portion 151 and from there to the third portion 153, along the channel 13 to be unloaded at the second outlet mouth 135.

The drainage holes 138 located on the bottom of the second portion 132 of the channel 13 enable drainage of any liquid fraction still present in the coarse solid fraction collected in the second section 132 and, therefore, the transport of a drier coarser solid fraction (and the recovery of a greater amount of liquid fraction downstream of the device 10).

The liquid fraction combined with the fine solid fraction that passes through the holes 183 of the second filter screen 18 enters the volume interposed between the second filter screen 18 and the first filter screen 16, in practice entering internally of the first 16 filter screen 16, becoming arranged by force of gravity in substance on the bottom thereof.

At this stage of filtration, the fluid under treatment (with the end of the solid fraction and the liquid fraction) encounters the first filter screen 16, which retains a further part of the fine solid fraction, leaving the liquid fraction to drain (together with a still-finer solid fraction which can be further divided from the liquid fraction using other sedimentary and/or chemical processes) towards the first outlet mouth 125, or externally of the device 10 into the collecting tank 1 environment in which the liquid fraction (clean) collects.

The fine solid fraction retained by the first filter screen 16 is deposited and accumulates by gravity on the internal surface 161 of the first filter screen 16, for example at the instantaneous lower portion thereof.

The rotation of the first filter screen 16 enables the transfer of the fine solid fraction, deposited and accumulated at the portion immediately below the internal surface 161, upwards so as to be unloaded, by force of gravity, internally of the first portion 131 of the channel 13 (through the first access portion 1341 thereof).

In practice, the blades 162 are realised such as to load and retain a quantity of the fine solid fraction deposited and accumulated on the end portion of the instantaneously lower first filter screen 16 (at the internal surface 161 thereof) and, at each revolution of the first filter screen 16, unload the quantity internally of the first section 131 of the channel 13.

The first portion 151 of the screw 15 is able to come into contact with the fine solid fraction which is gradually loaded and accumulated internally of the first portion 131.

In practice, the rotation of the screw conveyor 15 transports the fine solid fraction (together with the coarse solid fraction loaded at the second portion 132 of the channel 13) from the first portion 151 axially towards the third portion 153, along the channel 13, then then to unload it at the second outlet mouth 135.

The drainage holes 138 located on the bottom of the first section 131 of the channel 13 enable draining of any liquid fraction still present in the coarse solid fraction collected in the first section 131 and, therefore, the transport of a coarse and drier solid fraction (and the recovery of a greater quantity of liquid fraction downstream of the device 10).

Further, at each revolution of the first filter screen 16 and/or the second filter screen 18, a sector of the first filter screen 16 and/or the second filter screen 18 is positioned at the jet of fluid dispensed from the nozzles of the respective first bar 210 and/or second bar 220 (and/or rubs against the brush 211).

In practice, the mechanical action of the washing fluid (and/or rubbing of the brush 211) enables/facilitates the separation of the solid fraction (fine and/or coarse) from the internal surface 161 and/or from the concave surface 181, enabling the cleaning thereof and, at the same time (the cleaning groups 21,22 being positioned at an upper portion of the device 10) facilitating the loading of the channel 13 with the solid fraction thereof.

The invention as it is conceived is susceptible to numerous modifications and variants, all falling within the scope of the inventive concept.

Further, all the details can be replaced by other technically-equivalent elements.

In practice, the materials used, as well as the contingent shapes and dimensions, can be any according to requirements, without forsaking the scope of protection of the following claims.

## Claims

1. A device (10) for separating solids from waste water comprising:
- a support frame (11) provided with at least an inlet mouth (121), arrangeable internally of a collecting tank (1) of fluids containing a solid fraction dispersed in a liquid fraction, a first outlet mouth (125) of the liquid fraction when separated from the fluid and a second outlet mouth (135) of at least a part of the solid fraction when separated from the fluid,
- a first filter screen (16) associated to the support frame (11) so as to intercept the fluid which flows from the inlet mouth (121) to the first outlet mouth (125) and configured such as to retain and accumulate a part of the solid fraction at least at a first surface (161) of the first filter screen (16),
- at least an Archimedes screw (15) associated rotatably to the support frame (11) and provided with a first portion (151) able to transport the solid fraction accumulated by the first filter screen (16) towards the second outlet mouth (135),
- a second filter screen (18) associated to the support frame (11) so as to intercept the fluid flowing from the inlet mouth (121) to the first outlet mouth (125), located upstream of the first filter screen (16) in an advancement direction of the fluid from the inlet mouth (121) to the first outlet mouth (125) and configured so as to retain and accumulate a part of the solid fraction at least at a second surface (181) of the second filter screen (18), the Archimedes screw (15) comprising a second portion (152) able to transport the solid fraction accumulated from the second filter screen (18) towards the second outlet mouth (135),
**characterised in that** the second filter screen (18) exhibits a substantially truncoconical shape, with an external diameter and an internal diameter larger than the external diameter of the Archimedes screw (15), and is inserted on the second portion (152) of the Archimedes screw (15) with a concavity facing towards the free end of the Archimedes screw (15) located at the inlet mouth (121).

2. The device (10) of claim 1, wherein the second filter screen (18) comprises holes (183) of larger dimensions with respect to the holes (163) of the first filter screen (16).

3. The device (10) of claim 1 or 2, wherein the first filter screen (16) exhibits a tubular shape having a larger diameter than an external diameter of the Archimedes screw (15) and is inserted on the first portion (151) of the Archimedes screw (15).

4. The device (10) of claim 3, wherein the first filter screen (16) is rotatably associated about a first portion (131) of a superiorly-open channel (13), fixed to the support frame (11) and which at least partially surrounds the first portion (151) of the Archimedes screw (15).

5. The device (10) of claim 3 or 4, wherein the first filter screen (16) comprises at least a blade (162), for collecting and accumulating the solid fraction, fixed on the first surface (161).

6. The device (10) of any one of claims from 3 to 5, wherein the second filter screen (18) comprises at least a part inserted internally of the first filter screen (16).

7. The device (10) of claim 6, wherein the second filter screen (18) is rotatably associated about a second portion (132) of a superiorly open channel, fixed to the support frame (11) and which at least partially surrounds the second portion (152) of the Archimedes screw (15).

8. The device (10) of claim 6 or 7, wherein the second filter screen (18) comprises at least a blade (182), for collecting and accumulating the solid fraction, fixed on the second surface (181) of the second filter screen (18).

9. The device (10) of any one of the preceding claims, wherein the second filter screen (18) is fixed to the first filter screen (16).

10. The device (10) of any one of the preceding claims, **characterised in that** it comprises at least a cleaning group (21, 22) of at least one among the first filter screen (16) and the second filter screen (18).

11. The device (10) of claim 4 or 7, wherein at least one among the first portion (131) and the second portion (132) of the channel (13) comprises drainage holes (138) of the liquid fraction of the separating fluid loaded in the channel (13).

12. A group for separating solids from waste fluids which comprises a device (10), according to any one of the preceding claims, and a collecting tank (1) of the fluid to be separated in which the device (10) is fixable so as to sub-divide the internal volume of the collecting tank (1) into two separate environments communicating only by means of the first filter screen (16) and the second filter screen (18), wherein a first environment of the fluid to be filtered communicates with the inlet mouth (121) of the device (10) and a second environment communicates with the first outlet mouth (121) of the device (10).

## Patentansprüche

1. Vorrichtung (10) zum Abscheiden von Feststoffen aus Abwasser, Folgendes umfassend:
ein Stützgestell (11), ausgestattet mit mindestens einer Einlassmündung (121), die innerhalb eines Sammeltanks für Fluide angeordnet werden kann, welche eine Feststofffraktion enthalten, die in einer Flüssigfraktion verteilt ist, einer ersten Auslassmündung (125) für die Flüssigfraktion, wenn sie vom Fluid abgeschieden ist, und einer zweiten Auslassmündung (135) für mindestens einen Teil der Feststofffraktion, wenn diese vom Fluid abgeschieden ist,
ein erstes Filtersieb (16), das derart mit dem Stützgestell (11) verbunden ist, dass das Fluid aufgefangen wird, das von der Einlassmündung (121) zur ersten Auslassmündung (135) strömt, und das derart gestaltet ist, dass ein Teil der Feststofffraktion mindestens auf einer ersten Oberfläche (161) des ersten Filtersiebes (16) zurückgehalten und angehäuft wird,
mindestens eine Archimedische Schraube (15), die drehbar mit dem Stützgestell (11) verbunden ist und mit einem ersten Abschnitt (151) ausgestattet ist, der in der Lage ist, die vom ersten Filtersieb (16) angehäufte Feststofffraktion zur zweiten Auslassmündung (135) zu transportieren,
ein zweites Filtersieb (18), das derart mit dem Stützgestell (11) verbunden ist, dass das Fluid aufgefangen wird, welches von der Einlassmündung (121) zur ersten Auslassmündung (125) strömt, das sich stromaufwärts des ersten Filtersiebs (16) in einer Vorschubrichtung des Fluids von der von der Einlassmündung (121) zur ersten Auslassmündung (125) befindet und das derart gestaltet ist, dass ein Teil der Feststofffraktion mindestens auf einer zweiten Oberfläche (181) des zweiten Filtersiebes (18) zurückgehalten und angehäuft wird, wobei die Archimedische Schraube (15) einen zweiten Abschnitt (152) umfasst, der in der Lage ist, die vom zweiten Filtersieb (18) angehäufte Feststofffraktion zur zweiten Auslassmündung (135) zu transportieren,
**dadurch gekennzeichnet, dass** das zweite Filtersieb (18) im Wesentlichen eine Kegelstumpfform mit einem Außendurchmesser und einem Innendurchmesser, größer als der Außendurchmesser der Archimedischen Schraube (15), aufweist und auf den zweiten Abschnitt (152) der Archimedischen Schraube (15) aufgesetzt ist, mit einer Wölbung, die zum freien Ende der Archimedischen Schraube (15) weist, welches an der Einlassmündung (121) angeordnet ist.

2. Vorrichtung (10) nach Anspruch 1, wobei das zweite Filtersieb (18) Öffnungen (183) umfasst, deren Abmessungen größer sind als die der Öffnungen (163) des ersten Filtersiebes (16).

3. Vorrichtung (10) nach Anspruch 1 oder 2, wobei das erste Filtersieb (16) eine Röhrenform aufweist, deren Durchmesser größer als der Außendurchmesser der Archimedischen Schraube (15) ist, und das Filtersieb (16) auf den ersten Abschnitt (151) der Archimedischen Schraube (15) aufgesetzt ist.

4. Vorrichtung (10) nach Anspruch 3, wobei das erste Filtersieb (16) drehbar um einen ersten Abschnitt (131) eines nach oben offenen Kanals (13) angebracht und am Stützgestell (11) befestigt ist sowie den ersten Abschnitt (151) der Archimedischen Schraube (15) mindestens teilweise umgibt.

5. Vorrichtung (10) nach Anspruch 3 oder 4, wobei das erste Filtersieb (16) mindestens ein Blatt (162) umfasst, das an der ersten Oberfläche (161) befestigt ist, um die Feststofffraktion zu sammeln und anzuhäufen.

6. Vorrichtung (10) nach einem der Ansprüche 3 bis 5, wobei das zweite Filtersieb (18) mindestens einen Teil umfasst, der in das erste Filtersieb (16) eingesetzt ist.

7. Vorrichtung (10) nach Anspruch 6, wobei das zweite Filtersieb (18) drehbar um einen zweiten Abschnitt (132) eines nach oben offenen Kanals (13) angebracht und am Stützgestell (11) befestigt ist sowie den zweiten Abschnitt (152) der Archimedischen Schraube (15) mindestens teilweise umgibt.

8. Vorrichtung (10) nach Anspruch 6 oder 7, wobei das zweite Filtersieb (18) mindestens ein Blatt (182) umfasst, das an der zweiten Oberfläche (181) des zweiten Filtersiebes (18) befestigt ist, um die Feststofffraktion zu sammeln und anzuhäufen.

9. Vorrichtung (10) nach einem der vorhergehenden Ansprüche, wobei das zweite Filtersieb (18) am ersten Filtersieb (16) befestigt ist.

10. Vorrichtung (10) nach einem der vorhergehenden Ansprüche, **dadurch gekennzeichnet, dass** sie mindestens eine Reinigungsgruppe (21, 22) des ersten Filtersiebes (16) und/oder des zweiten Filtersiebes (18) umfasst.

11. Vorrichtung (10) nach Anspruch 4 oder 7, wobei der erste Abschnitt (131) und/oder der zweite Abschnitt (132) des Kanals (13) Ablauföffnungen (138) für die Flüssigfraktion des in den Kanal (13) eingeführten abzuscheidenden Fluids umfassen/umfasst.

12. Gruppe zum Abscheiden von Feststoffen aus Abwasser, die eine Vorrichtung (10) nach einem der vorhergehenden Ansprüche und einen Sammeltank (1) für das abzuscheidende Fluid umfasst, wobei die Vorrichtung (10) derart befestigt werden kann, dass das Innenvolumen des Sammeltanks (1) in zwei getrennte Umgebungen geteilt wird, die nur mit Hilfe des ersten Filtersiebes (16) und des zweiten Filtersiebes (18) in Verbindung stehen, wobei die erste Umgebung des zu filternden Fluids mit der Einlassmündung (121) der Vorrichtung (10) in Verbindung steht und eine zweite Umgebung mit der ersten Auslassmündung (121) der Vorrichtung (10) in Verbindung steht.

## Revendications

1. Dispositif (10) de séparation des solides d'une eau usée, comprenant :
- un châssis de support (11) pourvu d'au moins une bouche d'entrée (121), agençable à l'intérieur d'un réservoir de collecte (1) de fluides contenant une fraction solide dispersée dans une fraction liquide, une première bouche de sortie (125) de la fraction liquide quand elle est séparée du fluide et une deuxième bouche de sortie (135) d'au moins une partie de la fraction solide quand elle séparée du fluide,
- un premier écran de filtre (16) associé au châssis de support (11) de manière à intercepter le fluide qui s'écoule de la bouche d'entrée (121) vers la première bouche de sortie (125) et configuré de manière à retenir et à accumuler une partie de la fraction solide au moins sur une première surface (161) du premier écran de filtre (16),
- au moins une vis d'Archimède (15) associée de manière rotative au châssis de support (11) et pourvue d'une première portion (151) capable de transporter la fraction solide accumulée par le premier écran de filtre (16) vers la deuxième bouche de sortie (135),
- un deuxième écran de filtre (18) associé au châssis de support (11) de manière à intercepter le fluide qui s'écoule de la bouche d'entrée (121) vers la première bouche de sortie (125), situé en amont du premier écran de filtre (16) dans une direction d'avancement du fluide depuis la bouche d'entrée (121) vers la première bouche de sortie (125) et configuré de manière à retenir et à accumuler une partie de la fraction solide au moins sur une deuxième surface (181) du deuxième écran de filtre (18), la vis d'Archimède (15) comprenant une deuxième portion (152) capable de transporter la fraction solide accumulée du deuxième écran de filtre (18) vers la deuxième bouche de sortie (135),
**caractérisé en ce que** le deuxième écran de filtre (18) exhibe une forme substantiellement tronconique, avec un diamètre externe et un diamètre interne supérieur au diamètre externe de la vis d'Archimède (15), et est inséré sur la deuxième portion (152) de la vis d'Archimède (15) avec une concavité qui fait face à l'extrémité libre de la vis d'Archimède (15) située sur la bouche d'entrée (121).

2. Dispositif (10) selon la revendication 1, dans lequel le deuxième écran de filtre (18) comprend des trous (183) de dimensions supérieures à celles des trous (163) du premier écran de filtre (16).

3. Dispositif (10) selon la revendication 1 ou 2, dans lequel le premier écran de filtre (16) présente une forme tubulaire dont le diamètre est supérieur à un diamètre externe de la vis d'Archimède (15) et est inséré sur la première portion (151) de la vis d'Archimède (15).

4. Dispositif (10) selon la revendication 3, dans lequel le premier écran de filtre (16) est associé de manière rotative autour d'une première portion (131) d'un canal ouvert dans sa partie supérieure (13), fixé au châssis de support (11) et qui entoure au moins partiellement la première portion (151) de la vis d'Archimède (15).

5. Dispositif (10) selon la revendication 3 ou 4, dans lequel le premier écran de filtre (16) comprend au moins une lame (162) pour collecter et accumuler la fraction solide, fixée sur la première surface (161).

6. Dispositif (10) selon l'une quelconque des revendications 3 à 5, dans lequel le deuxième écran de filtre (18) comprend au moins une partie insérée à l'intérieur du premier écran de filtre (16).

7. Dispositif (10) selon la revendication 6, dans lequel le deuxième écran de filtre (18) est associé de manière rotative autour d'une deuxième portion (132) d'un canal ouvert dans sa partie supérieure, fixé au châssis de support (11) et qui entoure au moins partiellement la deuxième portion (152) de la vis d'Archimède (15).

8. Dispositif (10) selon la revendication 6 ou 7, dans lequel le deuxième écran de filtre (18) comprend au moins une lame (182) pour collecter et accumuler la fraction solide, fixée sur la deuxième surface (181) du deuxième écran de filtre (18).

9. Dispositif (10) selon l'une quelconque des revendications précédentes, dans lequel le deuxième écran de filtre (18) est fixé au premier écran de filtre (16).

10. Dispositif (10) selon l'une quelconque des revendications précédentes, **caractérisé en ce qu'**il comprend au moins un groupe de nettoyage (21, 22) d'au moins un écran parmi le premier écran de filtre (16) et le deuxième écran de filtre (18).

11. Dispositif (10) selon la revendication 4 ou 7, dans lequel au moins une portion parmi la première portion (131) et la deuxième portion (132) du canal (13) comprend des trous de drainage (138) de la fraction liquide du fluide de séparation chargé dans le canal (13).

12. Groupe de séparation de solides à partir de fluides usés qui comprend un dispositif (10) selon l'une quelconque des revendications précédentes, et un réservoir de collecte (1) du fluide à séparer dans lequel le dispositif (10) peut être fixé de manière à subdiviser le volume interne du réservoir de collecte (1) en deux environnements séparés qui communiquent uniquement à l'aide du premier écran de filtre (16) et du deuxième écran de filtre (18), dans lequel un premier environnement du fluide à filtrer communique avec la bouche d'entrée (121) du dispositif (10) et un deuxième environnement communique avec la première bouche de sortie (121) du dispositif (10).
